# EUROPEAN PATENT SPECIFICATION

(11) **EP 2 841 289 B1**
(45) Date of publication and mention of the grant of the patent: **27.04.2016**
(21) Application number: 13714221.2
(22) Date of filing: 15.03.2013
(51) Int. Cl.: B60K 6/52, B60L 15/20, B60K 17/12, B60K 17/16, F16H 48/36, B60K 1/02, B60L 11/14, B60L 3/00

(54) **AN ELECTRICAL AXLE**
ELEKTRISCHE ACHSE
ESSIEU ÉLECTRIQUE

(30) Priority: 27.04.2012 SE 1250424
(43) Date of publication of application: 04.03.2015
(73) Proprietor: BorgWarner TorqTransfer Systems AB, 261 24 Landskrona (SE)
(72) Inventor: NILSSON, Kristoffer, 227 31 Lund (SE); LAGUNOFF, Gustaf, 211 57 Malmö (SE)
(74) Representative: Ström & Gulliksson AB
(86) International application number: PCT/EP2013/055380
(87) International publication number: WO 2013/160014

(56) References cited:
- WO-A1-2010/101506
- WO-A1-2012/066035
- DE-A1-102010 036 241

## Description

### Technical Field

The present invention relates to an electrical axle of a four wheeled vehicle. More particularly, the present invention relates to an electrical axle having a torque vectoring unit for providing a torque difference between a right wheel and a left wheel of said axle.

### Background

There is an increasing demand of providing four wheeled vehicles, such as cars, with propulsion units being more environmentally friendly than traditional combustion engines. A particular choice for such propulsion unit includes the use of electrical motors.

An electrical propulsion motor is typically arranged on a driving axle of the vehicle and provides torque to the driving wheels via a differential. Although it is possible to replace a combustion engine with such electrical driving axle the main track for many car manufacturers is to provide the electrical axle as an addition to the main combustion engine. Hence, such hybrid cars will have the possibility to switch propulsion unit for reducing the impact of the environment, as well as to improve driving characteristics of the vehicle.

One example of an electrical axle is described in the co-pending application PCT/EP2011/070253 (see WO 2012/066035, published after the priority date of the present application) by the same applicant, where the electrical propulsion motor is arranged coaxially on the axle together with a torque vectoring unit. The torque vectoring unit includes an electrical motor coupled to a differential mechanism of the electrical axle such that, upon activation, it provides a positive torque to one wheel and an opposite torque to another wheel, each wheels being disposed on the same axle.

Other examples of prior art electrical axles are described in DE102010036241, in accordance with the preamble of claim 1, and in WO2010/101506.

If such electrical axle is installed in a hybrid car, e.g. in a car having a combustion engine coupled to the front axle, it is desirable to arrange the electrical axle on the rear axle of the vehicle. However, since the available space at the rear axle often is extremely limited it is necessary to provide a very compact packing of the electrical axle. This is rendered even more difficult in hybrid applications where the exhaust system of the combustion engine must pass the electrical axle.

There is thus a need for an improved electrical axle allowing for a more compact packing without reducing the performance or functionality of the electrical axle.

### Summary

Accordingly, the present invention preferably seeks to mitigate, alleviate or eliminate one or more of the above-identified deficiencies in the art and disadvantages singly or in any combination and solves at least the above-mentioned problems by providing a device according to the appended claims.

It is thus an object of the invention to provide an electrical axle with a torque vectoring unit, which overcomes the above mentioned problems.

An idea of the present invention is to provide an electrical axle which allows for an improved packing of reduced size.

A further idea of the present invention to allow a more compact packing of the electrical axle without reducing the size of the electrical propulsion motor.

According to a first aspect, an electrical axle for a four wheeled road vehicle is provided. The electrical axle comprises an electrical propulsion motor arranged coaxially on said axle, a differential mechanism being connected to said electrical propulsion motor for driving two wheels arranged on a first side and a second side of said electrical axle, and an electrical torque vectoring motor arranged coaxially on said axle and connected to said fist side and second side for providing a change in torque distribution between said first side and said second side of said axle, wherein the diameter of the torque vectoring motor is less than the diameter of the electrical propulsion motor.

The electrical torque vectoring motor may be arranged at a lateral end of said axle whereby an exhaust system, normally arranged at a lateral side of the vehicle, may pass the electrical axle without any further modifications.

The outer diameter of the electrical torque vectoring motor may be between 45 and 80 % of the outer diameter of the electrical propulsion motor. Hence, improved packing may be achieved while still providing necessary performance of the electrical torque vectoring motor.

The electrical propulsion motor, the differential mechanism, and the electrical torque vectoring motor may be enclosed within a housing, and wherein said housing forms a passage for an exhaust system of a combustion engine. Due to the common housing improved packing is provided.

The maximum rotation speed of the electrical torque vectoring motor may be between 8000 and 25000 rpm. This enables high reduction of an reduction gear such that the torque level of the motor may be decreased.

The electrical torque vectoring motor may further comprise an oil cooling system for improving the cooling and thus allowing a reduced diameter.

A ratio between the inner diameter of the electrical torque vectoring motor rotor and the outer diameter of the electrical torque vectoring motor stator may be between 48/136 and 65/136, such that torque, provided by the electrical propulsion motor via the differential mechanism may pass through the center of the rotor to an adjacent wheel shaft.

The electrical torque vectoring motor may comprise at least one phase connector arranged radially. Since a rotor diameter decrease may be compensated by increasing the lateral length of the motor, such increase of length may be provided by arranging phase connectors radially instead of axially.

The electrical torque vectoring motor may comprise at least one temperature sensor arranged in the winding of said electrical torque vectoring motor, whereby it will be possible to drive the electrical torque vectoring motor further towards it maximum limit.

The differential mechanism may comprise a first planetary gear arranged on one side of the electrical propulsion motor and connected to said electrical propulsion motor and to a first side of said axle, and a second planetary gear arranged between the electrical propulsion motor and the electrical torque vectoring motor and connected to said electrical propulsion motor and to a second side of said axle. The electrical torque vectoring motor may further be connected to the second planetary gear directly, and to the first planetary gear via a balancing shaft extending parallel with the electrical axle. Such differential mechanism is advantageous in that it provides a significant decrease in torque bias ratio as compared to standard bevel differentials.

The electrical torque vectoring motor may be connected to the first and second planetary gears via a reduction gear, whereby the torque level provided by the electrical torque vectoring motor may be decreased.

The electrical torque vectoring motor may be a permanent magnet synchronous reluctance motor or a switched reluctance motor. This is advantageous in that the torque density of the electrical torque vectoring motor may be increased such that the diameter may be reduced.

The electrical torque vectoring motor may comprise end plates in order to provide improved balancing.

The electrical torque vectoring motor may be controlled by means of a controller configured to transmit control signals to said electrical torque vectoring motor for increasing the torque-current ratio of said electrical torque vectoring motor. Said controller may further be configured to utilize real time torque derating based on a thermal model as well as on temperature sensor signals. Additionally, said controller may be configured to control an adaptive cooling flow to said electrical torque vectoring motor based on a thermal model as well as on temperature sensor signals.

According to a second aspect, a four wheeled road vehicle is provided, comprising an electrical axle according to the first aspect.

### Brief description of drawings

Hereinafter, the invention will be described with reference to the appended drawings, wherein:
Fig. 1 is a cross sectional view of an electrical axle of a vehicle according to an embodiment; and
Fig. 2 is an isometric view of the electrical axle shown in Fig. 1.

### Detailed description

Several embodiments of the present invention will be described in more detail below with reference to the accompanying drawings in order for those skilled in the art to be able to carry out the invention. The invention may, however, be embodied in many different forms and should not be construed as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended claims. Furthermore, the terminology used in the detailed description of the particular embodiments illustrated in the accompanying drawings is not intended to be limiting of the invention.

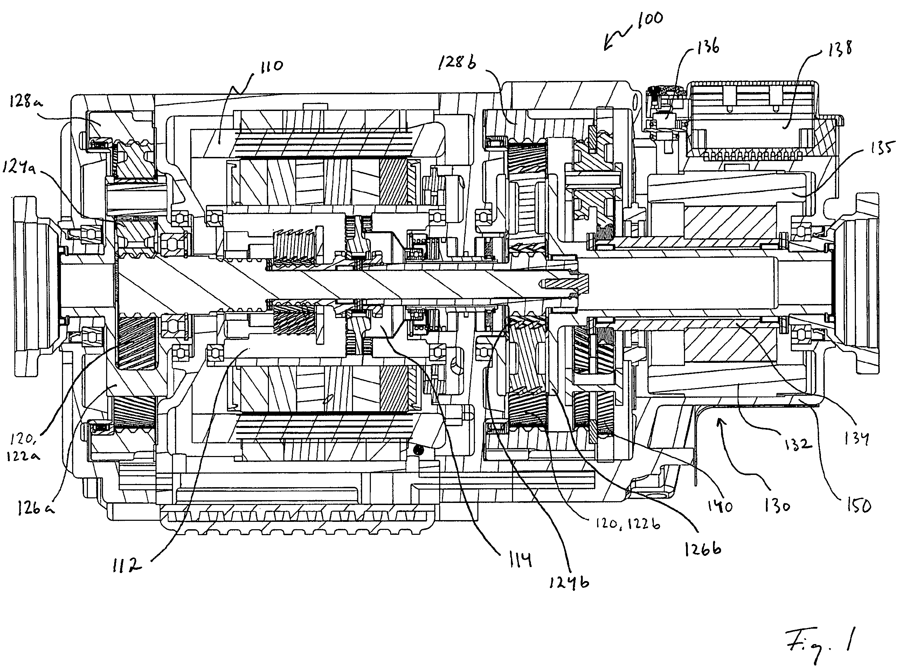

Starting with Fig. 1, an embodiment of an electrical axle 100 is shown. The electrical axle 100 may preferably be implemented as the rear axle in a four wheeled vehicle, such as a car, having a combustion engine driving the front axle. Hence, the electrical axle may be arranged for providing four wheel drive mode as well as for allowing changing the drive mode between front wheel drive and rear wheel drive. However, other drive line configurations are of course also possible and these are e.g. described in WO2010101506 by the same applicant.

The electrical axle 100 includes an electrical propulsion motor 110 arranged coaxially on the axle 100 such that the rotor 112 of the electrical propulsion motor 110 is aligned with the longitudinal axis of the axle 100. The rotor 112 may in some embodiments include a gear box 114, which will not be described further here.

The electrical propulsion motor 110 is connected on each lateral side to a differential mechanism 120 consisting of two coaxially aligned planetary gears 122a, 122b, of which the electrical propulsion motor 110 is driving the sun gears 124a, 124b. The left and right wheel shafts are connected to the planetary carriers 126a, 126b of the respective planetary gears 122a, 122b. The ring gear 128a, 128b of the respective planetary gear 122a, 122b has an outer surface which is connectable, e.g. by means of teeth, to a torque vectoring device 130.

The torque vectoring device 130 includes an electrical torque vectoring motor 132 arranged coaxially on the axle 100, such that the rotational axis of the rotor 134 of the electrical torque vectoring motor 132 is aligned with the rotational axis of the electrical propulsion motor 110. The electrical torque vectoring motor 132 is further arranged distally of the differential mechanism 120, i.e. between one of the planetary gears 120a, 120b and the adjacent wheel shaft. As can be seen in Fig. 1, the diameter of the electrical torque vectoring motor 132 is substantially smaller than the diameter of the electrical propulsion motor 110.

The electrical torque vectoring motor 132 is connected to the ring wheels 128a, 128b via a reduction gear 140. The gear reduction 140 is driven by the electrical torque vectoring motor 132 and may be a cycloidal drive, a double cycloidal drive, or a differential planetary gear as is described in PCT/EP2011/070253.

The output of the reduction gear 140 is preferably directly connected to the ring wheel 128b of the second planetary gear 122b, and connected to the ring wheel 128a of the first planetary gear 122a via a rotatable balancing shaft (not shown) extending parallel with the axle 100, and provided with gears for engagement with the ring gear 128a of the planetary gear 122a. The gears of the balancing shaft are configured for transmitting torque to the planetary gear 122a upon rotation of the balancing shaft, wherein the torque transmitted to the planetary gear 122a has an opposite direction compared to the torque transmitted to the other planetary gear 122b directly.

Now turning to the details of the electrical torque vectoring motor 132, a number of embodiments are possible for increasing the performance of the motor 132. The reduced diameter of the electrical torque vectoring motor 132 will lead to a significant reduction of performance. However, this may be compensated by improving some features of the electrical torque vectoring motor 132.

In one embodiment, the reduction of the reduction gear 140 is sufficiently high in order to decrease the torque level of the motor 132. By decreasing the torque level the diameter of the motor 132 may be made even smaller, and the reduction gear 140 may for this purpose provide a reduction between 30:1 and 40:1, preferably 34:1.

Despite the high reduction, the reduction gear 140 may have a high efficiency such that the torque is not being lost as friction. Hence, the torque may be reduced and the diameter of the electrical torque vectoring motor 132 may be correspondingly decreased. For this purpose the reduction gear 140 should be selected from high efficiency reduction gears, and it should further be optimized with regards to the efficiency required.

In a further embodiment it may be desired to reduce the torque bias ratio of the differential mechanism 120, such that the torque provided by the electrical torque vectoring motor 132 is transmitted to the differential mechanism 120 with a minimum of friction losses. This may e.g. be achieved by providing the differential mechanism 120 as the double planetary gears 122a, 122b, which construction has a significantly reduced torque bias ratio than conventional bevel differentials. Further to this, the torque bias ratio may be further decreased by optimizing the angles of the helical teeth of the differential mechanism whereby reaction forces causing friction are minimized. Moreover, it is preferred to improve the bearings of the ring wheels 128a, 128b for minimizing friction torque. This may e.g. be achieved by selecting a low friction material for the axial slide washers of the planetary differential 120. Typically, by providing the differential mechanism 120 by means of the double planetary gears 122a, 122b the torque bias ratio is below 1,1. This value is well below the typical value for a conventional differential having conical teeth, of which the torque bias ratio lies in the range of 1,2 to 1,5. Hence, the torque may be reduced and the diameter of the electrical torque vectoring motor 132 may be further decreased.

Preferably, the torque density of the electrical torque vectoring motor 132 is increased, whereby the diameter of the motor 132 may be made even smaller. This may e.g. be achieved by providing electrical torque vectoring motor 132 as a PMSRM motor having a high ratio of reluctance torque, iron and magnets of high quality, and an increased concentration of windings for enabling an increased length for the active part of the motor. However, it may also be possible to increase the torque density by selecting a switched reluctance motor having an increased concentration of windings as well as a comparably low base speed, whereby a less current and thus decreased copper losses allows smaller motor size requirements with regards to cooling needs.

In a preferred embodiment the electrical torque vectoring motor 132 is configured to operate at high speed, such as 20000 rpm. This enables the high reduction of the reduction gear 140, such that the torque level of the motor 132 may be decreased. The electrical motor 132 may for this purpose be provided as a switched reluctance motor, or a PMSM motor.

Conventionally, electrical motors suitable for being implemented as the electrical torque vectoring motor 132 are provided with a water mantle for cooling the rotating parts of the motor. However, the outer diameter of such torque vectoring motor 132 may be further decreased if a more efficient cooling is provided. For this purpose the electrical torque vectoring motor 132 may instead have an oil cooling system.

Another advantageous feature for reducing the size of the electrical torque vectoring motor 132 is to arrange it immediately in a housing 150 of the electrical axle 100 without any intermediate parts.

In a yet further embodiment, the diameter of the rotor 134 of the electrical torque vectoring motor 132 is relatively large compared to the outer diameter of the stator 135 such that torque, provided by the electrical propulsion motor 110 via the differential mechanism 120 may pass through the center of the rotor 134 to the wheel shaft (not shown). The ratio between the diameter of the rotor 134 and the diameter of the stator 135 may preferably be between 50/136 and 60/136, to be compared with the corresponding ratio for a prior art electrical torque vectoring motor typically lying in the range of 40/136 or less.

Further, the torque characteristics of the electrical torque vectoring motor 132 may be designed such that it provides high torque only for the low speed required for torque vectoring. This may be achieved by choosing a switched reluctance motor having an extremely high field weakening ratio, or selecting a PMSRM motor having as high field weakening ratio as possible preferably with the option to implement active short circuiting at extremely high speeds for protecting the motor from overvoltage.

A decrease of the diameter of the rotor 134 may further be compensated by increasing the lateral length of the motor 132. In order to allow such increase of length, the electrical torque vectoring motor 132 may be provided with phase connectors 136 arranged radially instead of axially. The phase connectors 136 may be connected to power electronics arranged within a housing 138 arranged radially outside of the housing 150.

It is further advantageous to provide an increased balancing of the electrical torque vectoring motor 132 for reducing vibrations. This is particularly desired for the preferred motor 132 operating at the high speed, e.g. at 20.000 rpm. Increased balancing may e.g. by achieved by providing the electrical torque vectoring motor 132 with end plates.

Another important parameter is the temperature of the electrical torque vectoring motor 132. By reducing the heat dissipation within the motor the size may be reduced. This may be accomplished by providing an improved control algorithm, wherein the activation and operation of the electrical torque vectoring motor 132 is optimized with respect to the driving characteristics of the vehicle. For this purpose a feedback control of the torque may be implemented whereby only the required torque is provided. Another preferred option is to provide a control algorithm for the electrical torque vectoring motor 132 such that the operation is optimized for a high torque-current ratio. A yet further embodiment utilizes real time torque derating, which is based on a thermal model and signals from included temperature sensors. Such control algorithm thus enables full utilization of the capacity of the motor without the need for temperature margins. A thermal model, using input from the temperature sensors of the motor 132, may also be provided for allowing adaptive cooling flow to the motor.

In addition to this it may be advantageous to provide temperature sensors (not shown), either one or a plurality of such, inside the winding of the torque vectoring motor 132. Such provision will make it possible to drive the motor 132 further towards it maximum limit. Such optimization of operating the motor 132 will also make it possible to further reduce the size, in particular the outer diameter, of the motor 132.

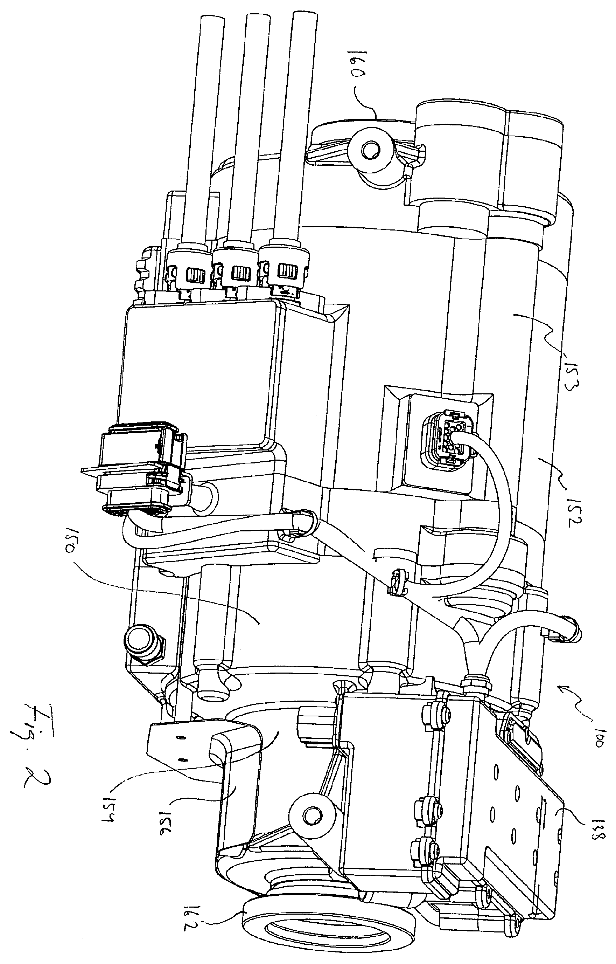

Now turning to Fig. 2 a perspective view of the electrical axle 100 shown in Fig. 1 is illustrated. The propulsion motor 110, the differential mechanism 120, the torque vectoring unit 130 (including the reduction gear 140) are enclosed within the housing 150 which forms two compartments 152, 154. The first compartment 152 extends laterally from a first side 160 of the electrical axle 100 towards the opposite side 162 of the axle 100 and encloses the electrical propulsion motor 110 and the differential mechanism 120. Further, the first compartment 152 includes a protrusion 153 enclosing the balance shaft connecting the torque vectoring unit 130 to the differential mechanism 120.

The second compartment 154 extends laterally from the end of the first compartment 152 to the second side 162 of the axle. The second compartment 154 thus encloses the torque vectoring motor 132, why the radial size of the second compartment 154 maybe much smaller than the radial size of the first compartment 152. Further to this, a cover plate, or heat shield, 156 is attached to the second compartment 154 for protecting the second compartment 154 from excess heat dissipated from the exhaust system if such system is arranged to pass the electrical axle 100.

In order to provide an improved packing the dimensions of the motors 110, 132 should be carefully determined. It has been found that the outer diameter of the propulsion motor 110 should be between 200 and 240 mm, preferably around 220 mm. In comparison to this the outer diameter of the electrical torque vectoring motor 132 should be between 100 and 150 mm, and preferably around 135 mm.

It will be appreciated that the embodiments described in the foregoing may be combined without departing from the scope as defined by the appended patent claims. Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. An electrical axle (100) for a four wheeled road vehicle, comprising an electrical propulsion motor (110) arranged coaxially on said axle (100),
a differential mechanism (120) being connected to said electrical propulsion motor for driving two wheels arranged on a first side (160) and a second side (162) of said electrical axle (100), and
an electrical torque vectoring motor (132) arranged coaxially on said axle (100) and connected to said fist side (160) and second side (162) for providing a change in torque distribution between said first side (160) and said second side (162) of said axle (100),
wherein the diameter of the torque vectoring motor (132) is less than the diameter of the electrical propulsion motor (110), **characterized in that**
the electrical propulsion motor (110), the differential mechanism (120), and the electrical torque vectoring motor (132) are enclosed within a housing (150), and wherein said housing (150) forms a passage for an exhaust system of a combustion engine.

2. The electrical axle according to claim 1, wherein the electrical torque vectoring motor (132) is arranged at a lateral end of said axle (100).

3. The electrical axle according to claim 1 or 2, wherein the outer diameter of the electrical torque vectoring motor (132) is between 45 and 80 % of the outer diameter of the electrical propulsion motor (110).

4. The electrical axle according to any one of the preceding claims, wherein the maximum rotation speed of the electrical torque vectoring motor (132) is between 8000 and 25000 rpm.

5. The electrical axle according to any one of the preceding claims, wherein the electrical torque vectoring motor (132) further comprises an oil cooling system.

6. The electrical axle according to any one of the preceding claims, wherein a ratio between the inner diameter of the electrical torque vectoring motor rotor (134) and the outer diameter of the electrical torque vectoring motor stator (135) is between 48/136 and 65/136.

7. The electrical axle according to any one of the preceding claims, wherein the electrical torque vectoring motor (132) comprises at least one phase connector (136) arranged radially.

8. The electrical axle according to any one of the preceding claims, wherein the electrical torque vectoring motor (132) comprises at least one temperature sensor arranged in the winding of said electrical torque vectoring motor (132).

9. The electrical axle according to any one of the preceding claims, wherein the differential mechanism (120) comprises a first planetary gear (122a) arranged on one side of the electrical propulsion motor (110) and connected to said electrical propulsion motor (110) and to a first side of said axle (160), and a second planetary gear (122b) arranged between the electrical propulsion motor (110) and the electrical torque vectoring motor (132) and connected to said electrical propulsion motor (110) and to a second side of said axle (132).

10. The electrical axle according to claim 9, wherein the electrical torque vectoring motor (132) is connected to the second planetary gear (122b) directly, and to the first planetary gear (122a) via a balancing shaft extending parallel with the electrical axle (100).

11. The electrical axle according to claim 10, wherein the electrical torque vectoring motor (132) is connected to the first and second planetary gears (122a, 122b) via a reduction gear (140).

12. The electrical axle according to any one of the preceding claims, wherein the electrical torque vectoring motor (132) is a permanent magnet synchronous reluctance motor or a switched reluctance motor.

13. The electrical axle according to any one of the preceding claims, wherein the electrical torque vectoring motor (132) comprises end plates.

14. A four wheeled road vehicle, comprising an electrical axle (100) according to any one of the preceding claims.

## Patentansprüche

1. Eine elektrische Achse (100) für ein Straßenfahrzeug mit vier Rädern, das Folgendes aufweist
einen elektrischen Vortriebsmotor (10), der koaxial an der Achse (100) angeordnet ist,
einen Differenzialmechanismus (120),der mit dem elektrischen Vortriebsmotor zum Antreiben von zwei Rädern die auf einer ersten Seite (160) und einer zweiten Seite (162) der elektrischen Achse (100) angeordnet sind, verbunden ist, und
einen elektrischen Drehmomentverteilungs- bzw. Torque-Vectoring-Motor (132), der koaxial an der Achse (100) angeordnet ist und mit der ersten Seite (160) und der zweiten Seite (162) verbunden ist zum Vorsehen einer Änderung in der Drehmomentverteilung zwischen der ersten Seite (160) und der zweiten Seite (162) der Achse (100),
wobei der Durchmesser des Torque-Vectoring-Motors (132) geringer ist als der Durchmesser des elektrischen Vortriebsmotors (110), **dadurch gekennzeichnet, dass** der elektrische Vortriebsmotor (110), der Differenzialmechanismus (120) und der elektrische Torque-Vectoring-Motor (132) in ein Gehäuse (150) eingeschlossen sind, und wobei das Gehäuse (150) einen Durchlass für ein Abgassystem eines Verbrennungsmotors bildet.

2. Elektrische Achse nach Anspruch 1, wobei der elektrische Torque-Vectoring-Motor (132) an einem seitlichen Ende der Achse (100) angeordnet ist.

3. Elektrische Achse nach Anspruch 1 oder 2, wobei der Außendurchmesser des elektrischen Torque-Vectoring-Motors (132) zwischen 45 und 80% des Außendurchmessers des elektrischen Vortriebsmotors (110) beträgt.

4. Elektrische Achse nach einem der vorhergehenden Ansprüche, wobei die maximale Drehzahl des elektrischen Torque-Vectoring-Motors (132) zwischen 8000 und 25000 U/min ist.

5. Elektrische Achse nach einem der vorhergehenden Ansprüche, wobei der elektrische Torque-Vectoring-Motor (132) weiter ein Ölkühlungssystem aufweist.

6. Elektrische Achse nach einem der vorhergehenden Ansprüche, wobei ein Verhältnis zwischen dem Innendurchmesser des elektrischen Torque-Vectoring-Motorrotors (134) und dem Außendurchmesser des elektrischen Torque-Vector-Motorstators (135) zwischen 48/136 und 65/136 ist.

7. Elektrische Achse nach einem der vorhergehenden Ansprüche, wobei der elektrische Torque-Vectoring-Motor (132) wenigstens einen Phasenverbinder (136) aufweist, der radial angeordnet ist.

8. Elektrische Achse nach einem der vorhergehenden Ansprüche, wobei der elektrische Torque-Vectoring-Motor (132) wenigstens einen Temperatursensor aufweist, der in der Wicklung des elektrischen Torque-Vectoring-Motors (132) angeordnet ist.

9. Elektrische Achse nach einem der vorhergehenden Ansprüche, wobei der Differenzialmechanismus (120) ein erstes Planetengetriebe (122a) aufweist, das auf einer Seite des elektrischen Vortriebsmotors (110) angeordnet ist und mit dem elektrischen Vortriebsmotor (110) und einer ersten Seite der Achse (160) verbunden ist, und ein zweites Planetengetriebe (122b), das zwischen dem elektrischen Vortriebsmotor (110) und dem elektrischen Torque-Vectoring-Motor (132) angeordnet ist und mit dem elektrischen Vortriebsmotor (110) und einer zweiten Seite der Achse (132) verbunden ist.

10. Elektrische Achse nach Anspruch 9, wobei der elektrische Torque-Vectoring-Motor (132) mit dem zweiten Planetengetriebe (122b) direkt und mit dem ersten Planetengetriebe (122a) über eine Ausgleichswelle verbunden ist, die sich parallel zu der elektrischen Achse (100) erstreckt.

11. Elektrische Achse nach Anspruch 10, wobei der elektrische Torque-Vectoring-Motor (132) mit den ersten und zweiten Planetengetrieben (122a, 122b) über ein Untersetzungsgetriebe (140) verbunden ist.

12. Elektrische Achse nach einem der vorhergehenden Ansprüche, wobei der elektrische Torque-Vectoring-Motor (132) ein Permanentmagnet-Synchronreluktanzmotor oder ein geschalteter Reluktanzmotor ist.

13. Elektrische Achse nach einem der vorhergehenden Ansprüche, wobei der elektrische Torque-Vectoring-Motor (132) Endplatten aufweist.

14. Ein Straßenfahrzeug mit vier Rändern, das eine elektrische Achse (100) nach einem der vorhergehenden Ansprüche aufweist.

## Revendications

1. Essieu électrique (100) pour un véhicule routier à quatre roues, comprenant
un moteur électrique de propulsion (110) disposé coaxialement sur ledit essieu (100),
un mécanisme de différentiel (120) en prise avec ledit moteur électrique de propulsion pour entraîner deux roues disposées d'un premier côté (160) et d'un second côté (162) dudit essieu électrique (100), et
un moteur électrique de vectorisation de couple (132) disposé coaxialement sur ledit essieu (100) et en prise avec ledit premier côté (160) et ledit second côté (162) de façon à établir une variation de distribution de couple entre ledit premier côté (160) et ledit second côté (162) dudit essieu (100),
dans lequel le diamètre du moteur de vectorisation de couple (132) est inférieur au diamètre du moteur électrique de propulsion (110), **caractérisé en ce que**
le moteur électrique de propulsion (110), le mécanisme de différentiel (120) et le moteur électrique de vectorisation de couple (132) sont enfermés à l'intérieur d'un carter (150), et dans lequel ledit boîtier (150) forme un passage destiné à un système d'échappement d'un moteur à combustion.

2. Essieu électrique selon la revendication 1, dans lequel le moteur électrique de vectorisation de couple (132) est disposé au niveau d'une extrémité latérale dudit essieu (100).

3. Essieu électrique selon la revendication 1 ou 2, dans lequel le diamètre extérieur du moteur électrique de vectorisation (132) fait entre 45 et 80 pourcent du diamètre extérieur du moteur électrique de propulsion (110).

4. Essieu électrique selon l'une quelconque des revendications précédentes, dans lequel la vitesse de rotation maximale du moteur électrique de vectorisation de couple (132) est comprise entre 8 000 et 25 000 révolutions par minute (rpm).

5. Essieu électrique selon l'une quelconque des revendications précédentes, dans lequel le moteur électrique de vectorisation de couple (132) comprend en outre un système de refroidissement par huile.

6. Essieu électrique selon l'une quelconque des revendications précédentes, dans lequel un rapport entre le diamètre intérieur du rotor (134) de moteur électrique de vectorisation de couple et le diamètre extérieur du stator (135) de moteur électrique de vectorisation de couple est compris entre 48/136 et 65/136.

7. Essieu électrique selon l'une quelconque des revendications précédentes, dans lequel le moteur électrique de vectorisation de couple (132) comprend au moins un connecteur de phase (136) disposé radialement.

8. Essieu électrique selon l'une quelconque des revendications précédentes, dans lequel le moteur électrique de vectorisation de couple (132) comprend au moins un capteur de température disposé dans l'enroulement dudit moteur électrique de vectorisation de couple (132).

9. Essieu électrique selon l'une quelconque des revendications précédentes, dans lequel le mécanisme de différentiel (120) comprend un premier engrenage planétaire (122a) disposé d'un côté du moteur électrique de propulsion (110) et en prise avec ledit moteur électrique de propulsion (110) et avec un premier côté dudit essieu (160), et un second engrenage planétaire (122b) disposé entre le moteur électrique de propulsion (110) et le moteur électrique de vectorisation de couple (132) et en prise avec ledit moteur électrique de propulsion (110) et avec un second côté dudit essieu (132).

10. Essieu électrique selon la revendication 9, dans lequel le moteur électrique de vectorisation de couple (132) est en prise directe avec le second engrenage planétaire (122b), et avec le premier engrenage planétaire (122a) par le biais d'un arbre d'équilibrage s'étendant parallèlement à l'essieu électrique (100).

11. Essieu électrique selon la revendication 10, dans lequel le moteur électrique de vectorisation de couple (132) est en prise avec les premier et second engrenages planétaires (122a, 122b) par le biais d'un engrenage de réduction (140).

12. Essieu électrique selon l'une quelconque des revendications précédentes, dans lequel le moteur électrique de vectorisation de couple (132) est un moteur synchrone à réluctance à aimants permanents ou un moteur à réluctance commutée.

13. Essieu électrique selon l'une quelconque des revendications précédentes, dans lequel le moteur électrique de vectorisation de couple (132) comprend des plaques d'extrémité.

14. Véhicule routier à quatre roues, comprenant un essieu électrique (100) selon l'une quelconque des revendications précédentes.
